# DEMANDE DE BREVET EUROPEEN

(11) **EP 0 566 501 A1**
(43) Date de publication de la demande: **20.10.1993**
(21) Numéro de dépôt: 93401011.7
(22) Date de dépôt: 19.04.1993
(51) Int. Cl.: A47C 17/16, B60N 2/34

(54) **Dispositif d'articulation d'un élément de siège transformable**

(30) Priorité: 17.04.1992 FR 9204809
(71) Demandeur: SCOPEMA, F-87150 Oradour sur Vayres (FR)
(72) Inventeur: Ribette, Michel, F-87150 Oradour Sur Vayres (FR)
(74) Mandataire: Polus, Camille

(57) **Abrégé**

Dispositif d'articulation d'un élément (10) constituant l'assise ou le dossier d'un siège (12) transformable, notamment d'un siège pour une auto-caravane, du type comprenant un bâti (24) monté à rotation entre deux supports (14) autour d' un axe (20) et habillé d'une garniture (22), et un mécanisme unique (18) de positionnement et de manoeuvre du bâti autour de l'axe transversal caractérisé en ce que le mécanisme (18) comprend des moyens de blocage (26) mobiles entre deux positions, l'une en saillie pour coopérer avec des crans définissant des positions différentes de l'élément de siège, (48) ménagés dans les supports (14) et l'autre escamotée, ainsi qu'une tringlerie (28) de renvoi dont la première extrémité est reliée à ces moyens de blocage et dont la seconde extrémité débouche sur un côté (16) de l'élément de siège articulé et est relié à un organe de manoeuvre. L'invention a également pour objet les variantes de sièges munis de ce dispositif.

## Description

La présente invention a pour objet un dispositif d'articulation d'un élément de siège transformable.

Dans l'industrie automobile, et plus particulièrement dans l'industrie des auto-caravanes, les utilisateurs souhaitent disposer de sièges transformables de façon qu'ils aient plusieurs fonctions ce qui permet de multiples applications avec un nombre réduit d'accessoires en conférant à l'ensemble une grande compacité. C'est ainsi que l'on trouve de nombreux sièges montés pivotants sur des glissières de façon qu'ils puissent être déplacés en rotation ainsi qu'en translation suivant l'axe longitudinal du véhicule.

D'autre part, on connaît depuis longtemps des sièges dont l'assise reste fixe et le dossier est inclinable avec des angles tels que le dossier vient dans le prolongement horizontal de l'assise de façon à constituer une partie d'un couchage par exemple.

D'autre part, on connaît dans les auto-caravanes des fauteuils comprenant une assise et un dossier, tous deux articulés par rapport à des axes de rotation parallèles, permettant à chacun des éléments du siège de jouer le rôle d'assise ou de dossier.

De tels fauteuils ont néanmoins un gros inconvénient qui est celui de nécessiter les deux mains de l'utilisateur pour être manoeuvrés.

En effet, l'une des mains actionne la commande de déblocage tandis que l'autre déplace l'élément de fauteuil proprement dit pour lui donner l'inclinaison souhaitée.

Or dans une auto-caravane, les espaces libres sont exigus et l'accessibilité de certains éléments est toute relative, si bien que l'accès aux organes de déverrouillage n'est pas aisé et la nécessité d'utiliser les deux mains le rend encore plus délicat.

Enfin, lorsqu'il s'agit d'un fauteuil, et que la manoeuvre consiste à abaisser le dossier, les efforts engendrés sont faibles mais dès lors qu'il s'agit d'une banquette, et qu'il faut la relever, la manoeuvre devient impossible, surtout si l'utilisateur est un enfant.

Une autre contrainte vient du fait que les auto-caravanes sont faites essentiellement pour des voyages itinérants, si bien que les fauteuils sont très souvent manipulés d'une position à une autre suivant qu'il s'agit d'un déplacement routier, d'un repas ou d'un couchage. Il est donc nécessaire de disposer d'un système fiable.

De plus, dans le cas des auto-caravanes qui sont amenées à circuler sur le réseau routier, il convient qu'un tel siège soit conforme aux normes et aux législations en vigueur, en particulier en ce qui concerne le verrouillage du dossier et de l'assise du fauteuil par rapport au support d'orientation, ce qui exclut tout montage mécanique de faible résistance.

On connaît un siège transformable par le modèle d'utilité allemand DE-U-9 112 088.

Ce siège prévoit des assise et dossier mobiles avec des systèmes de blocage de ces assise et dossier.

La description mentionne de façon théorique les diverses combinaisons de sièges sans explication quant aux moyens utilisés pour y parvenir.

Un brevet américain US-A-4 085 962 mentionne également des combinaisons de sièges dans différentes positions et décrit en détail des moyens d'articulation et de blocage. Ces moyens restent complexes et requièrent de nombreuses pièces et surtout interdisent toute manoeuvre unique à une main du levier et des mouvements de l'élément correspondant. Le mécanisme est en effet intégré dans l'assise.

La présente invention pallie les inconvénients de l'art antérieur et propose un dispositif d'articulation d'éléments constituant un siège transformable et manoeuvrable avec une seule main, d'une grande fiabilité, d'une installation simple, pouvant être disposé sur des glissières existantes en remplacement d'autres sièges, qui est peu encombrant et qui évite de perturber l'esthétique du siège après habillage.

A cet effet le dispositif d'articulation d'un élément constituant l'assise ou le dossier d'un siège transformable, notamment pour auto-caravane comprend un bâti monté à rotation entre deux supports autour d'un axe transversal et habillé d'une garniture se caractérise en ce qu'il comprend un organe unique de positionnement et de manoeuvre du bâti autour de cet axe transversal.

Selon une autre caractéristique de l'invention, l'organe de positionnement comprend des moyens de blocage, mobiles entre deux positions, l'une en saillie pour coopérer avec des crans ménagés dans les supports et l'autre escamotée, ainsi qu'une tringlerie de renvoi dont la première extrémité est reliée à ces moyens de blocage et dont la seconde extrémité débouche sur le côté du siège.

Selon un mode de réalisation particulier de l'invention, les crans sont au moins au nombre de trois, l'un disposé suivant l'axe vertical, et les deux autres à 90° de part et d'autre de cet axe vertical.

Selon une caractéristique particulière de l'invention, la seconde extrémité de la tringlerie débouche sur le côté du siège à proximité immédiate de l'angle opposé à l'axe transversal.

D'autre part, l'organe unique de manoeuvre comprend une poignée de manoeuvre associée à la seconde extrémité de la tringlerie de façon à actionner cette tringlerie d'une part et à permettre simultanément la préhension de l'élément à basculer d'autre part.

Selon des variantes de l'invention, la poignée est solidaire de la tringlerie ou du bâti.

Selon un mode de réalisation particulier, les moyens de blocage de l'organe de positionnement comprennent deux barres mobiles en translation par rapport au bâti, parallèlement à l'axe de rotation et reliées entre elles par des moyens de déverrouillage solidaires de la première extrémité de la tringlerie.

Les moyens de déverrouillage comprennent un bras monté à rotation autour d'un axe par rapport au bâti et relié de part et d'autre de cet axe aux deux barres mobiles en translation d'une part, ainsi qu'à la tringlerie par l'une de ses extrémités d'autre part.

Selon une autre caractéristique de l'invention, les moyens de blocage comportent également des moyens de verrouillage actifs, comportant des moyens de rappel élastique des barres en position écartée dans laquelle les extrémités libres font saillie et coopèrent avec les crans des supports.

L'invention a également pour objet un siège transformable, notamment pour auto-caravane, qui comporte quatre éléments munis chacun d'un dispositif d'articulation selon l'invention, qui sont montés sur des glissières de façon à réaliser au moins les combinaisons suivantes, deux fauteuils en position face à la route, deux fauteuils face à face ou un couchage à quatre éléments juxtaposés.

L'invention concerne de plus une variante de siège à dossier double.

L'invention est décrite ci-après en regard des dessins annexés sur lesquels :
- la figure 1 représente une vue en perspective d'un siège transformable selon l'invention,
- la figure 2 représente une vue générale du bâti en perspective avec l'organe unique de positionnement et de manoeuvre,
- la figure 3 est une vue de détail éclatée des moyens de blocage,
- la figure 4 est une vue en perspective de la tringlerie,
- la figure 5 est une vue en perspective d'un mode de réalisation des moyens de déverrouillage,
- la figure 6 est une vue de détail d'un mode de réalisation de l'organe unique de manoeuvre et de positionnement,
- les figures 7A à 7H, représentent certaines possibilités fonctionnelles réalisables à l'aide de deux sièges transformables munis du dispositif d'articulation selon l'invention,
- la figure 8 représente un mode de réalisation particulier d'un siège selon l'invention qui comprend des appui-tête,
- la figure 8A représente le siège de la figure 8 mais dans la position couchage avec coussin complémentaire,
- la figure 9 représente une vue en perspective d'un siège muni de dispositifs d'articulation selon l'invention et complété avec des accessoires intégrés,
- la figure 10 représente une variante d'agencement de sièges selon l'invention, en position siège,

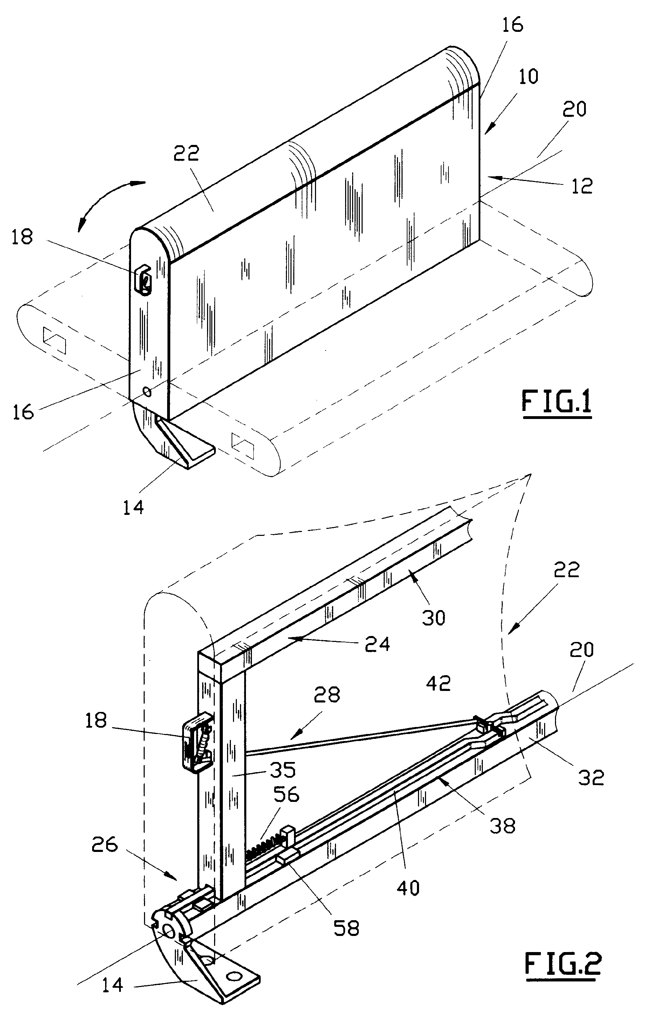

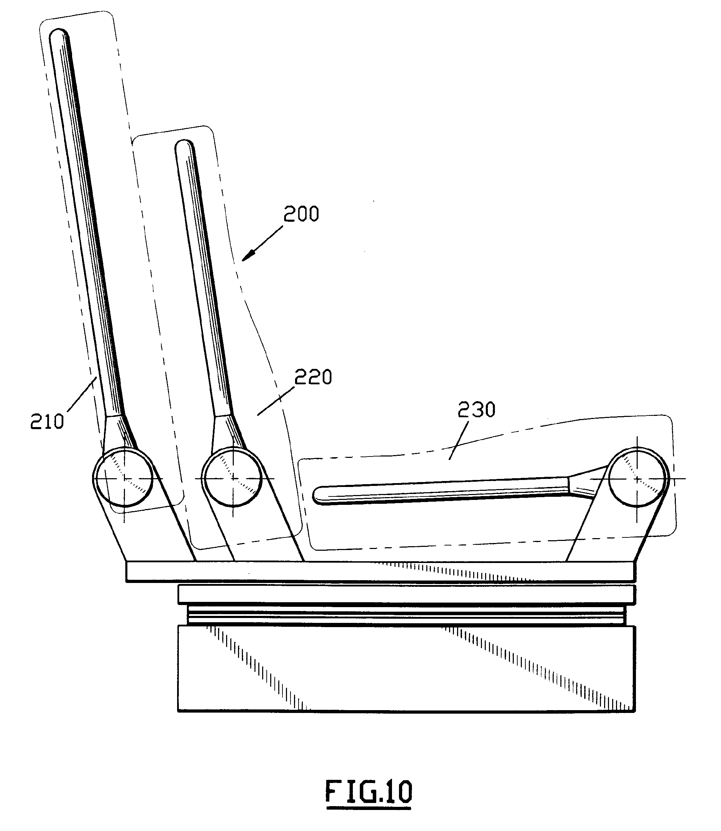

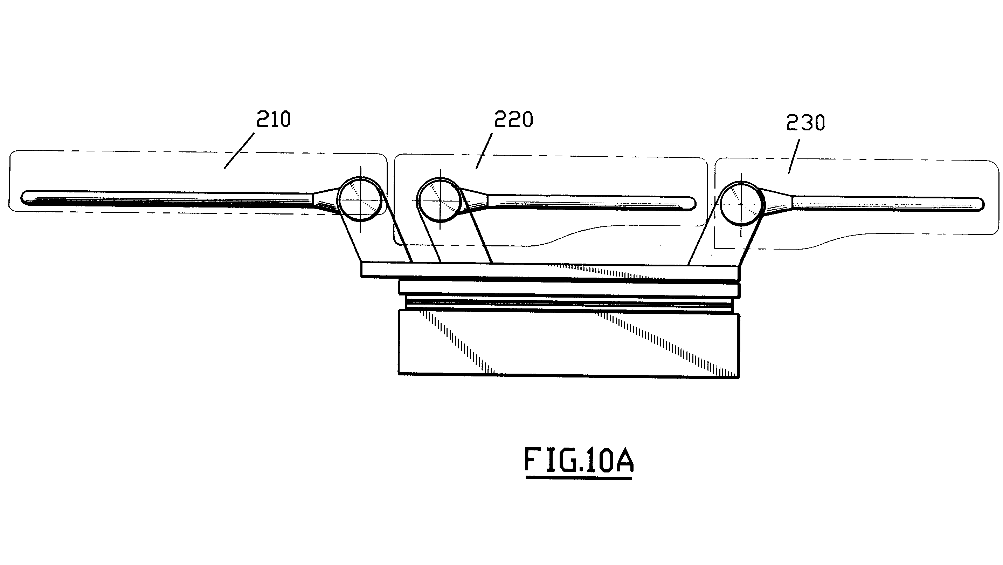

- la figure 1 OA est une variante de la figure 10, en position couchage,

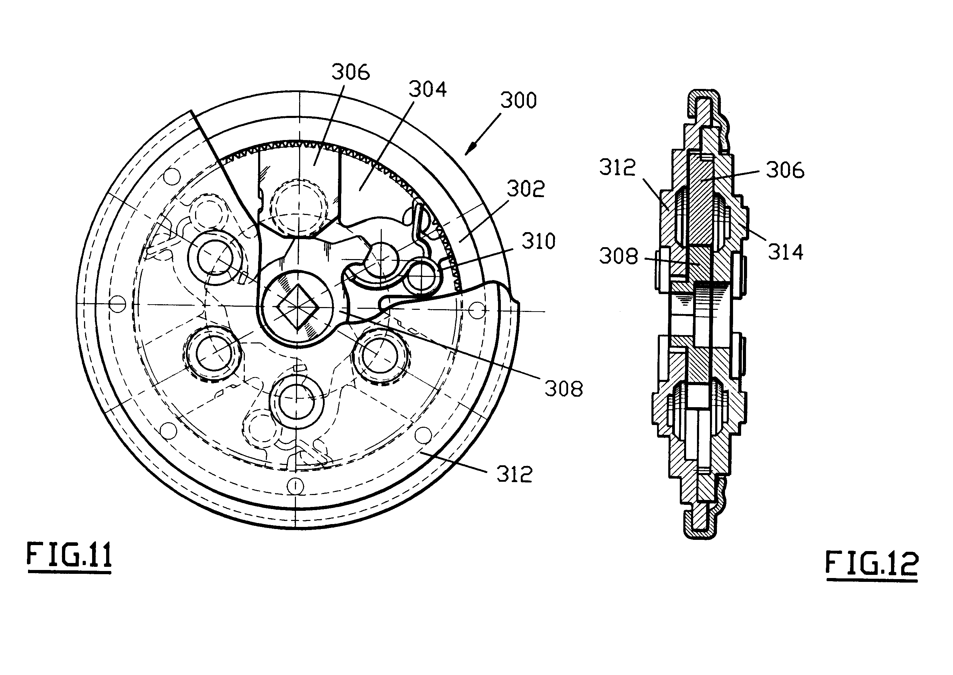

- la figure 11 est une variante d'un mode de réalisation des moyens de crantage représentée en élévation latérale, et
- la figure 12, est une vue en coupe verticale médiane de ces moyens de crantage.

Sur la figure 1, on a représenté un élément 10 d'un siège 12 en trait plein dans la position verticale et en trait discontinu dans deux positions à 90° par rapport à la verticale.

L'élément est fixé sur une paire de supports latéraux 14, au droit des côtés 16 de l'élément 10.

Cet élément 10 de siège comprend également un organe 18 unique de positionnement et de manoeuvre, l'axe de rotation étant matérialisé et référencé 20.

Sur la figure 1, l'élément de siège est représenté habillé d'une garniture 22, tandis que sur la figure 2, la garniture 22 est représentée en trait discontinu afin de faire apparaître un bâti 24, des moyens de blocage 26 et une tringlerie 28.

Le bâti 24 comprend une barre supérieure 30, une barre inférieure 32 et les montants verticaux 34, dont l'un est représenté sur cette figure et qui relie les barres supérieure et inférieure 30 et 32.

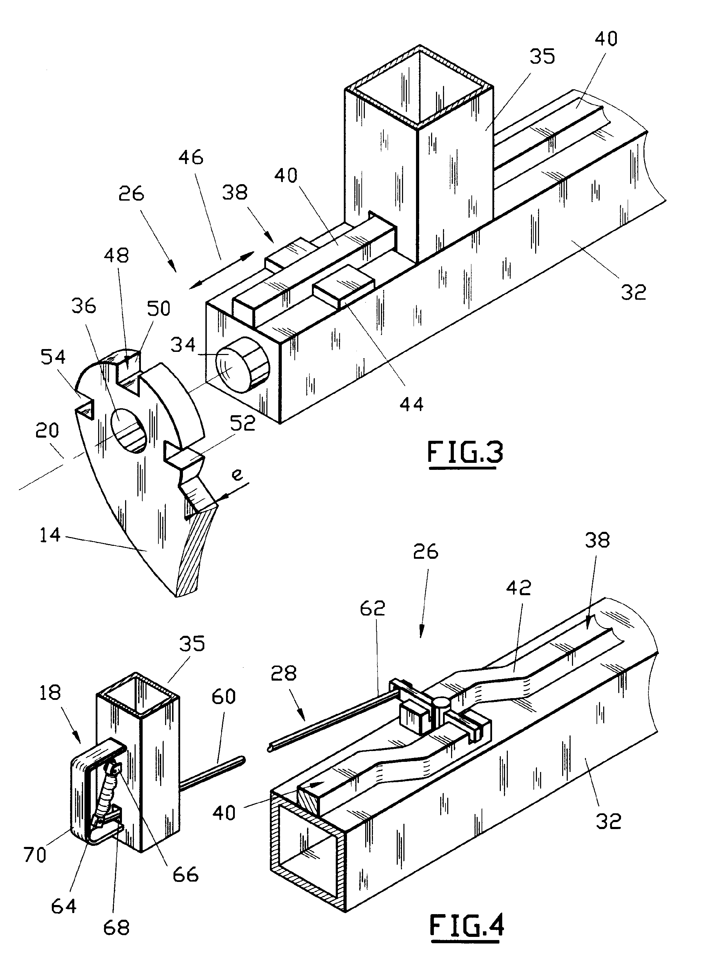

Les moyens de blocage 26 sont représentés en détail sur la figure 3.

La barre inférieure 32 est munie à son extrémité d'un tourillon 34 qui coopère avec un alésage 36, ménagé dans le support 14 et centré par rapport à l'axe 20. De façon à améliorer la qualité de la liaison, le tourillon peut être fileté et muni d'une vis prenant appui sur le support qui évite le dégagement du tourillon hors de ce support, notamment en cas de choc violent.

Les moyens de blocage 26 comprennent des moyens de verrouillage 38 qui comprennent deux barres 40 et 42 agencées sur la barre inférieure 32 du bâti 24 à la façon d'une crémone.

La barre 40, ainsi que cela est représenté en détail sur la figure 3, coulisse entre des guides 44, solidaires de la barre inférieure 32, suivant la double flèche 46.

La barre 40, en position rétractée, est située au droit de l'extrémité de la barre inférieure 32, tandis que dans la position en saillie, elle déborde de la barre 32 sur une épaisseur e, sensiblement égale à l'épaisseur du support 14.

Ce support 14 comprend en effet des crans 48 et dans le mode de réalisation représenté, les crans sont au nombre de trois, l'un 50 suivant la verticale, et deux autres 52 et 54 répartis à 90° de part et d'autre du premier cran 50.

La barre 40 traverse également le montant latéral 34 qui assure un guidage complémentaire.

Ainsi que cela est représenté sur la figure 2, des moyens de rappel élastique 56 sont interposés entre le bâti 24, et plus particulièrement entre le montant latéral 35 et une butée 58, solidaire de la barre mobile 40.

Le ressort exerce un effort de rappel qui tend à mettre en saillie les barres 40 et 42.

L'ensemble de la tringlerie 28 est représenté en détail sur la figure 4 où l'on retrouve la barre inférieure 32, les deux barres mobiles en translation 40 et 42, les moyens de verrouillage 38 des moyens de blocage 26, le montant latéral 35, ainsi que l'organe unique de positionnement et de manoeuvre 18.

La tringlerie comprend une tringle 60, dont l'extrémité 62 est interposée entre les deux barres mobiles 40 et 42, l'autre extrémité étant reliée à un levier 64, articulé par rapport au montant latéral 34 autour d'un axe 66. La tringle coulisse à travers une ouverture 68, ménagée dans le montant latéral 35.

L'organe unique de positionnement et de manoeuvre 18 est complété par un moyen de préhension 70, solidaire du montant latéral 35 et entourant le levier 64.

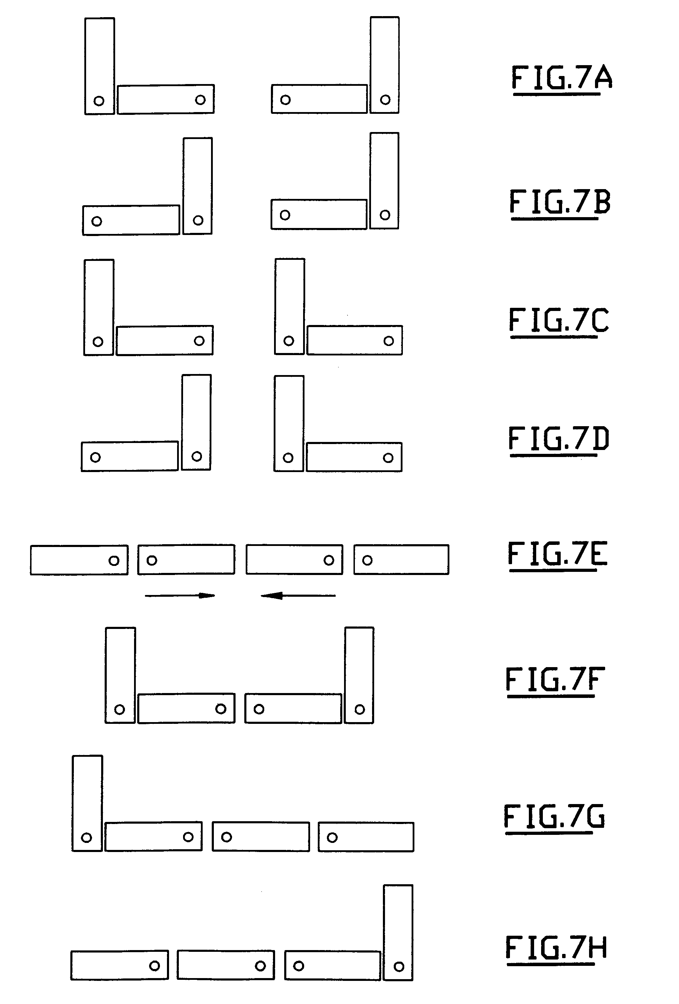

Le fonctionnement du dispositif d'articulation selon l'invention est décrit en regard des figures 1, 2, 3, 4 et de la figure 7 qui représente les différentes options possibles à partir d'un ensemble de deux sièges à deux éléments.

Etant dans la position verticale de la figure 1, l'utilisateur saisit l'organe unique de positionnement et de manoeuvre 18, plus particulièrement la poignée 70 et à l'aide des doigts saisit le levier 64.

La tringle 60 par rotation de la pièce d'extrémité 62 assure le rapprochement des deux barres 40 et42, si bien que les extrémités libres sont retirées des logements correspondants 50 des supports 14 et l'ensemble de l'élément peut donc pivoter autour de l'axe 20, d'un côté ou de l'autre grâce au tourillon 34 qui tourne dans l'alésage 36.

L'utilisateur ayant saisi la poignée, peut sans la lâcher et sans lâcher le levier 64, manoeuvrer l'ensemble du bâti de l'élément 10 jusqu'à ce que l'élément soit horizontal.

Il suffit de relâcher le levier 64 et tout en maintenant la poignée 70, de déplacer légèrement l'élément jusqu'à ce que les barres mobiles en translation 40 et 42 viennent s'encliqueter dans les crans 52 ou 54 correspondant suivant le sens de rotation.

Dès lors, les moyens de rappel élastique 56, sous forme d'un ressort, ont tendance à mettre les barres 40 et 42 en saillie et donc à les faire pénétrer dans les crans correspondants des supports.

Ainsi, sur la figure 7, un équipement comprenant deux sièges, munis chacun de deux éléments formant assise ou dossier, permet de former les combinaisons représentées sur les figures 7A à 7H.

En 7A, les deux sièges sont en vis à vis, notamment utilisés pour la position "repas" dans une auto-caravane.

La figure 7B représente les deux fauteuils orientés dans la même direction, notamment en position "route" ou comme dans la position 7C pour certaines applications particulières, tandis que dans la position 7D, le premier siège est orienté en position route et le second siège est orienté vers l'arrière en position " salon" par exemple.

La position 7E nécessite le montage des sièges sur glissières comme cela se fait de façon connue, si bien que les deux éléments de chacun des sièges sont disposés à l'horizontale et une fois rapprochés, ils peuvent constituer un couchage de dimensions confortables.

La position 7F des deux éléments relevés et deux éléments juxtaposés formant assise est une application particulière pour les enfants, par exemple, tandis que les positions 7G et 7H représentent une position couchage pour les deux éléments du premier siège et une position fauteuil pour le second siège de façon à prolonger l'assise de ce second siège.

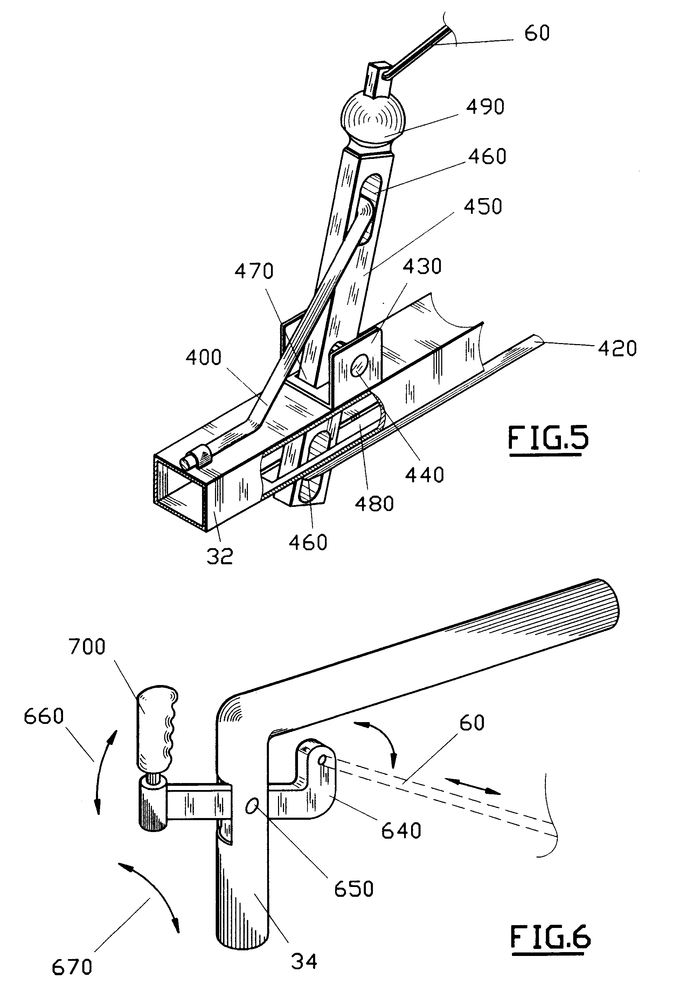

Sur la figure 5, on a représenté une variante de l'extrémité de la tringlerie et des moyens de blocage selon l'invention, dans laquelle les barres 400 et 420 correspondent aux barres 40 et 42 du mode de réalisation principal mais dans la variante représentée sur cette figure, la barre 400 est mobile en translation sur la face supérieure de la barre inférieure 32, tandis que la barre 420 est mobile en translation sur la face inférieure de la barre inférieure 32, du bâti 24.

Une chape 430 permet de monter un axe de rotation 440 autour duquel pivote un bras 450, muni de deux trous 460, disposés de part et d'autre de l'axe de rotation 440 et dans lesquels viennent se bloquer les extrémités des barres 400 et 420.

Le bras 450 passe à travers les lumières 470 et 480, ménagées à travers la chape et à travers la barre inférieure 32 du bâti 24.

L'extrémité supérieure du bras 450 est munie d'une rotule 490, à l'extrémité de laquelle vient se fixer la tringle 60 du dispositif d'articulation selon l'invention.

Sur la figure 6, on a représenté une variante de l'organe unique 18 de positionnement et de manoeuvre.

Selon cette variante, l'organe comprend un levier 640, à l'une des extrémités duquel vient se fixer l'extrémité supérieure de la tringle 60. Ce levier 640 est articulé autour d'un axe 650, transversal et monté dans le montant latéral 34, représenté avec une section circulaire sur cette figure 6. L'autre extrémité du levier 640 est munie d'une poignée 700.

Le fonctionnement de cette variante de l'organe unique permet à l'utilisateur de saisir la poignée 700, de déverrouiller les moyens de blocage par la tringlerie, en la soulevant, ce mouvement étant représenté par la flèche 660, tandis que l'élément est mis en rotation autour de l'axe 20, d'un côté ou de l'autre, du plan vertical ainsi que cela est schématiquement représenté par la double flèche 670.

Ainsi à l'aide de l'organe de positionnement unique, l'élément est déplacé en rotation après déverrouillage et verrouillé automatiquement dès que la poignée est relâchée.

La présente invention propose également une variante de réalisation d'un siège composé de deux éléments et équipé du dispositif d'articulation suivant l'invention.

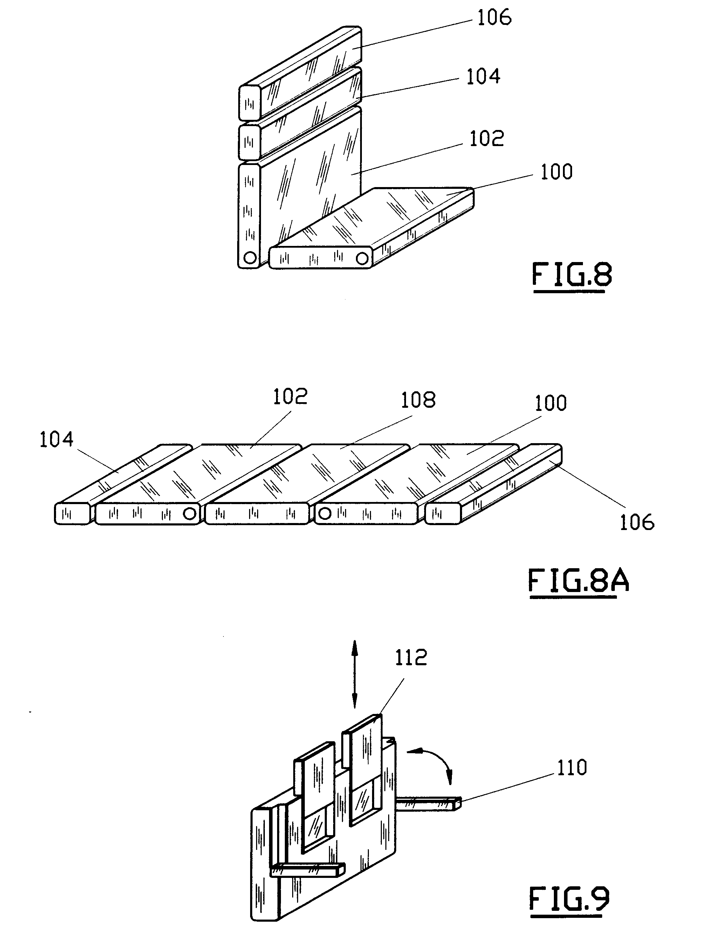

Ainsi si l'on se reporte à la figure 8, on a représenté deux éléments de siège dont l'un forme l'assise 100 et l'autre le dossier 102.

L'assise comprend un bâti simple tandis que le dossier est complété par deux appui-tête 104,106 superposés.

Ces appui-tête permettent d'augmenter la hauteur du dossier lorsqu'il est en position siège.

De plus les appui-tête étant amovibles il est possible de réaliser un couchage de grande dimensions se rapprochant des couchages d'habitations fixes moyennant l' ajout d'un coussin complémentaire. Cette combinaison est représentée sur la figure 8A. L'élément constituant l'assise est pivoté de 180° et l'un des appui-tête 106 est fixé sur l'extrémité de cette assise.

Le dossier 102 est pivoté de 90° dans le sens opposé à celui de l'assise. Il suffit alors de placer entre les deux éléments le coussin complémentaire 108, représenté en trait discontinu sur cette figure 8A.

Sur la figure 9 on a également représenté une variante de réalisation d'un siège équipé du dispositif d'articulation selon l'invention.

Le siège est, dans ce mode de réalisation, une banquette à deux places. Il est prévu des accoudoirs 110 pivotants et des appui-tête 112, escamotables par translation.

En effet les accoudoirs sont intégrés dans l'épaisseur de la banquette si bien qu'en position d'utilisation ils font saillie à 90° par rapport au dossier et dans la position escamotée ils sont parfaitement intégrés au dossier.

Quant aux appui-tête ils font saillie au dessus du dossier lorsqu'ils sont utilisés et sont parfaitement intégrés au dossier dans la position escamotée.

Une telle réalisation permet de disposer d'accessoires sans pour autant interdire les combinaisons d'aménagement prévues grâce au dispositif d'articulation selon l'invention et précédemment indiquées.

Sur la figure 10, on a représenté un agencement de sièges particuliers qui prévoit une banquette avec un dossier 200 double à deux éléments 210, 220, articulés indépendamment par rapport au bâti ainsi qu'une assise 230 également articulée.

Sur la figure 10A, le dossier 210 est incliné vers l'arrière jusqu'à une position horizontale, le dossier 220 étant incliné vers l'avant jusqu'à l'horizontale également, en continuité avec le premier dossier, ceci après avoir relevé l'assise 230 et lui avoir fait subir une rotation de 180°.

Le siège ainsi transformé est un lit de grandes dimensions ceci grâce à des manoeuvres simples.

Sur les figure 11 et 12, on a représenté une variante des moyens de blocage 300, de type connu et comprenant une couronne extérieure crantée 302, un moyen intérieur fixe 304 dans lequel sont montés des doigts mobiles 306 dont l'extrémité comprend des dents prévues pour coopérer avec la couronne extérieure crantée 302.

Une came centrale 308 montée à rotation et de façon coaxiale à la couronne est maintenue en position stable, dans laquelle les doigts sont en saillie.

Des ressorts 310 assurent le maintien de la came dans cette position.

Des flasques 312 et 314 forment le carter extérieur.

L'ensemble est auto-lubrifié.

Un tel montage est simplifié mais il reste muni d'une commande unique, avec poignée selon l'invention.

## Revendications

1. Dispositif d'articulation d'un élément (10) constituant l'assise ou le dossier d'un siège (12) transformable, notamment d'un siège pour une auto-caravane, du type comprenant un bâti (24) monté à rotation entre deux supports (14) autour d' un axe (20) et habillé d'une garniture (22), et un mécanisme unique (18) de positionnement et de manoeuvre du bâti autour de l'axe transversal caractérisé en ce que le mécanisme (18) comprend des moyens de blocage (26) mobiles entre deux positions, l'une en saillie pour coopérer avec des crans définissant des positions différentes de l'élément de siège, (48) ménagés dans les supports (14) et l'autre escamotée, ainsi qu'une tringlerie (28) de renvoi dont la première extrémité est reliée à ces moyens de blocage et dont la seconde extrémité débouche sur un côté (16) de l'élément de siège articulé et est reliée à un organe de manoeuvre.

2. Dispositif selon la revendication 1, caractérisé en ce qu'au moins un support (14) comprend trois crans (50, 52, 54) répartis autour de l'axe de rotation, l'un (50) définissant une position verticale de l'élément de siège et les deux autres (52, 54) disposés à 90° de part et d'autre.

3. Dispositif selon la revendication 1 ou 2, caractérisé en ce que la seconde extrémité de la tringle débouche sur le côté (16) du siège à proximité immédiate de l'angle opposé à l'axe transversal (20).

4. Dispositif selon l'une quelconque des revendications 1 à 3, caractérisé en ce que la seconde extrémité de la tringle est associée à une poignée (64, 70 ; 700), de manoeuvre de façon à actionner la tringlerie (28) d'une part, et à basculer l'élément d'autre part.

5. Dispositif selon la revendication 4, caractérisé en ce que la poignée est solidaire de la tringlerie ou du bâti.

6. Dispositif selon l'une quelconque des revendications 1 à 5, caractérisé en ce que les moyens de blocage (26) comprennent deux barres (40, 42 ; 400, 420) mobiles en translation par rapport au bâti (24), parallèlement à l'axe de rotation (20) et reliées entre elles par des moyens de déverrouillage solidaires de la première extrémité (62) de la tringlerie, les extrémités libres des moyens de blocage coopérant avec les crans du support en vis à vis.

7. Dispositif selon la revendication 6, caractérisé en ce que les moyens de déverrouillage comprennent un bras (450) monté à rotation autour d'un axe (440) par rapport au bâti et relié, de part et d'autre de cet axe, aux deux barres (400, 420) d'une part ainsi qu'à la tringlerie par l'une de ses extrémités d'autre part.

8. Dispositif selon l'une quelconque des revendications 1 à 4 caractérisé en ce qu'il comprend des moyens de verrouillage comportant des moyens (56) de rappel élastique des barres en position écartée dans laquelle les extrémités libres font saillie et coopèrent avec les supports.

9. Ensemble de siège transformable notamment pour une auto-caravane comportant quatre éléments munis chacun d'un dispositif d'articulation selon l'une quelconque des revendications 1 à 8 caractérisé en ce que les éléments sont montés sur des glissières de façon à réaliser au moins les combinaisons suivantes, deux fauteuils face à la route, deux fauteuils face à face, ou un lit.

10. Siège transformable notamment pour une auto-caravane muni chacun d'un dispositif d'articulation selon l'une quelconque des revendications 1 à 8, caractérisé en ce que le dossier (200) comprend deux éléments (210, 220) articulés indépendamment l'un de l'autre et une assise (230) également articulés de façon à réaliser un couchage.
